# EUROPEAN PATENT APPLICATION

(11) **EP 1 515 340 A1**
(43) Date of publication of application: **16.03.2005**
(21) Application number: 04021384.5
(22) Date of filing: 08.09.2004
(51) Int. Cl.: G11B 27/10, G06F 17/30

(54) **System and method for creating and playing globally relevant playlists**

(30) Priority: 15.09.2003 US 503138 P; 24.11.2003 US 720651
(71) Applicant: MICROSOFT CORPORATION, Redmond, Washington 98052 (US)
(72) Inventor: Schrock, Christian E., New York, NY 10021 (US); Ingraham, Brent L., Seattle Washington 98119 (US); Reitz, James, Seattle Washington 98115 (US); Roup, Oliver, Seattle Washington 98121 (US); Yangurskiy, Vladimir, Redmond Washington 98052 (US); Zarakhovsky, Eugene, Seattle Washington 98121 (US)
(74) Representative: Grünecker, Kinkeldey, Stockmair & Schwanhäusser Anwaltssozietät

(57) **Abstract**

A globally relevant playlist presented. A globally relevant playlist includes track references corresponding to a plurality of tracks. Each track reference includes a global track identifier that uniquely identifies the corresponding referenced track among any number of computers or computing devices. A method for playing tracks according to a globally relevant playlist is presented. A track referenced in the playlist is selected. It is determined whether the track is locally accessible according to the global track identifier. If the track is accessible, it is played. If the track is not locally accessible, the track is retrieved from a track source associated with the track and according to the global track identifier. A method for downloading tracks to a player device according to a globally relevant playlist is also presented.

## Description

### FIELD OF THE INVENTION

The present invention relates to playing music and/or audio-visual tracks identified in a globally relevant playlist.

### BACKGROUND OF THE INVENTION

The role of personal computers has expanded from strictly work related applications, into a variety of different areas, including entertainment centers. For example, most personal computers sold today are equipped to play music and/or videos stored on CDs or DVDs, on the computer's hard drives, or from remote sources and retrieved as streams.

One advantage realized by this expanded role of computers is that the computer may be programmed to play certain songs, or sequences of songs, that do not necessarily correspond to the order they are stored on deliverable media. For example, using their computers, users can create personal playlists of their favorite songs (frequently referred to as tracks) for subsequent playback. The user may create the personal playlist to skip unappealing tracks on a CD, or, for tracks stored on the computer, to play favorite tracks from multiple artists that were delivered on multiple CDs or online. Similarly, personal playlists can be created according to themes, or according to moods that certain music evokes. Thus, personal playlists are only limited by the tracks available, and the creativity of the user.

Unfortunately, personal playlists, as this term suggests, are personal to the particular computer upon which they are created, and consequently, are not easily shared between other users on other computers. One reason that these personal playlists are not easily shared is that the playlists make specific references to tracks in regard to the playlist creator's computer and computer configuration. For example, a playlist creator will create a personal playlist by explicitly referencing tracks available to the computer. However, each computer may have a particular file system with its own naming conventions, and files stored on that computer, in particular music tracks, may be stored in arbitrary locations, on arbitrary drives, and under arbitrary names. On one computer, tracks may be stored on CDs accessible through a CD drive, while on another computer, all tracks may be stored on the hard drive because there is no CD drive. Clearly, a personal playlist referencing tracks available to one computer cannot currently be shared by multiple users on separate computers, even when each computer has all of the tracks available, unless they are all substantially similarly configured, which is quite unlikely.

Additionally, as computers have expanded their role into the entertainment arena, so also have computers matured in networking and inter-communications. A group of friends can now easily communicate with one another over the Internet. This expanded communication has enabled computer users to exchange more than interpersonal communications. They can also exchange data and files, including audio and video tracks. One unfortunate aspect of this powerful communication ability is the improper copying and distribution of audio and video tracks.

Typically, music becomes popular as friends share their favorite songs among themselves. Thus, before computers enabled easily copying and distribution of songs across the Internet, friends would get together, hear the new music, and if they liked it, would purchase a CD or album with popular songs. However, with current peer-to-peer file sharing services, music tracks can be instantly copied and distributed to almost anyone, anywhere, at virtually no cost. Indeed, the recording industry claims a significant drop in music sales is directly attributable to the rise of peer-to-peer file sharing services.

What is needed is a globally relevant playlist that can be shared by multiple computer users on multiple computing devices. It would be further beneficial if the globally relevant playlist encourages, rather than violates, the proper ownership of audio and video tracks. The present invention addresses these and other issues in the prior art.

### SUMMARY OF THE INVENTION

In accordance with aspects of the present invention, a method for playing audio tracks on a computing device is presented. A track referenced by a globally relevant playlist is selected. A determination is made as to whether the selected track is accessible to the computing device according to a global track identifier associated with the first track. If the selected track is accessible to the computing device, the track is retrieved and played. However, if the track is not currently accessible to the computing device, a further determination is made as to whether the track can be obtained from a remote location according to the global track identifier. If so, the track is obtained from the remote location and played.

According to other aspects of the present invention, a method for downloading tracks from a computer onto a player device according to a globally relevant playlist is presented. A track referenced by the globally relevant playlist is selected. A determination is made as to whether the selected track is accessible to the computer according to a global track identifier associated with the selected track. If the selected track is accessible to the computer, the track is downloaded to the player device. However, if the track is not currently accessible to the computer, a further determination is made as to whether the track can be obtained from a remote location according to the global track identifier. If so, the track is obtained from the remote location and then downloaded to the player device.

According to further aspects of the invention, a method for creating a globally relevant playlist is presented. A plurality of tracks to be referenced by the playlist are identified. For each identified track, track reference information is written to the globally relevant playlist. The track reference information for each identified track includes a global track identifier that uniquely identifies the track among a plurality of computing devices.

According to still further aspects of the present invention, a globally relevant playlist for controlling the play of tracks on a computing device is presented. The globally relevant playlist includes track references corresponding to a plurality of tracks. Each track reference includes a global track identifier that uniquely identifies the track among a plurality of computing devices.

### BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is a block diagram illustrating an exemplary computing system suitable for implementing aspects of the present invention;
FIGURE 2 is a block diagram illustrating an exemplary networked computing environment suitable for implementing aspects of the present invention;
FIGURE 3 is a block diagram illustrating an exemplary globally relevant playlist formed in accordance with aspects of the present invention;
FIGURE 4 is a flow diagram illustrating an exemplary routine for posting a globally relevant playlist and receiving a royalty as the playlist is downloaded for a price;
FIGURE 5 is a flow diagram of an exemplary routine 500 for a computer playing the tracks in a globally relevant playlist;
FIGURE 6 is a flow diagram illustrating an exemplary routine 600 for downloading tracks onto a player device according to a globally relevant playlist; and
FIGURE 7 is a flow diagram illustrating an exemplary routine 700 for creating a globally relevant playlist, in accordance with the present invention.

### DETAILED DESCRIPTION OF THE PREFERRED EMBODIMENT

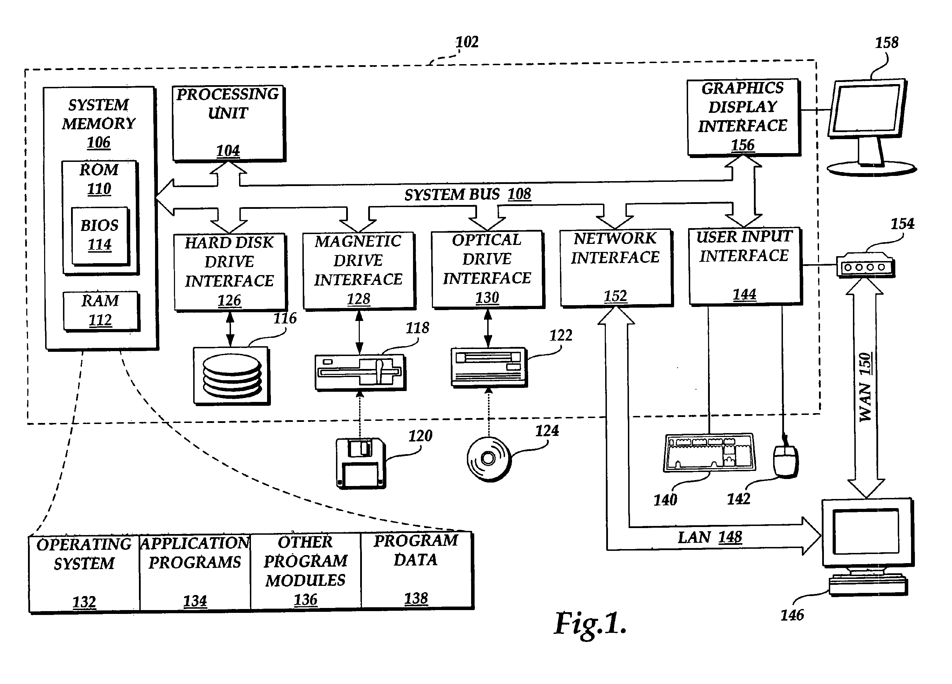

FIGURE 1 and the following discussion are intended to provide a brief, general description of a computing system suitable for implementing various features of the invention. While the computing system will be described in the general context of a personal computer usable as a stand-alone computer, or in a distributed computing environment where complementary tasks are performed by remote computing devices linked together through a communication network, those skilled in the art will appreciate that the invention may be practiced with many other computer system configurations, including multiprocessor systems, minicomputers, mainframe computers, and the like. In addition to the more conventional computer systems described above, those skilled in the art will recognize that the invention may be practiced on other computing devices including laptop computers, tablet computers, and the like.

While aspects of the invention may be described in terms of application programs that run on an operating system in conjunction with a personal computer, those skilled in the art will recognize that those aspects also may be implemented in combination with other program modules. Generally, program modules include routines, programs, components, data structures, etc., that perform particular tasks or implement particular abstract data types.

With reference to FIGURE 1, an exemplary system for implementing aspects of the invention includes a conventional personal computer 102, including a processing unit 104, a system memory 106, and a system bus 108 that couples the system memory to the processing unit 104. The system memory 106 includes read-only memory (ROM) 110 and random-access memory (RAM) 112. A basic input/output system (BIOS) 114, containing the basic routines that help to transfer information between elements within the personal computer 102, such as during startup, is stored in ROM 110.

The personal computer 102 further includes a hard disk drive 116, a magnetic disk drive 118, e.g., to read from or write to a removable disk 120, and an optical disk drive 122, e.g., for reading a CD-ROM disk 124 or to read from or write to other optical media. The hard disk drive 116, magnetic disk drive 118, and optical disk drive 122 are connected to the system bus 108 by a hard disk drive interface 126, a magnetic disk drive interface 128, and an optical drive interface 130, respectively. The drives and their associated computer-readable media provide nonvolatile storage for the personal computer 102. Although the description of computer-readable media above refers to a hard disk, a removable magnetic disk, and a CD-ROM disk, it should be appreciated by those skilled in the art that other types of media that are readable by a computer, including magnetic cassettes, flash memory cards, digital video disks, Bernoulli cartridges, ZIP disks, and the like, may also be used in the exemplary operating environment.

A number of program modules may be stored in the drives and RAM 112, including an operating system 132, one or more application programs 134, other program modules 136, and program data 138. A user may enter commands and information into the personal computer 102 through input devices such as a keyboard 140 or a mouse 142. Other input devices (not shown) may include a microphone, touch pad, joystick, game pad, satellite dish, scanner, or the like. These and other input devices are often connected to the processing unit 104 through a user input interface 144 that is coupled to the system bus, but may be connected by other interfaces (not shown), such as a game port or a universal serial bus (USB).

A display device 158 is also connected to the system bus 108 via a display subsystem that typically includes a graphics display interface 156 and a code module, sometimes referred to as a display driver, to interface with the graphics display interface. While illustrated as a stand-alone device, the display device 158 could be integrated into the housing of the personal computer 102. Furthermore, in other computing systems suitable for implementing the invention, such as a tablet computer, the display could be overlaid with a touch-screen. In addition to the elements illustrated in FIGURE 1, personal computers also typically include other peripheral output devices (not shown), such as speakers or printers.

The personal computer 102 may operate in a networked environment using logical connections to one or more remote computers, such as a remote computer 146. The remote computer 146 may be a server, a router, a peer device, or other common network node, and typically includes many or all of the elements described relative to the personal computer 102. The logical connections depicted in FIGURE 1 include a local area network (LAN) 148 and a wide area network (WAN) 150. Such networking environments are commonplace in offices, enterprise-wide computer networks, intranets, and the Internet. It should be appreciated that the connections between one or more remote computers in the LAN 148 or WAN 150 may be wired or wireless connections, or a combination thereof.

When used in a LAN networking environment, the personal computer 102 is connected to the LAN 148 through a network interface 152. When used in a WAN networking environment, the personal computer 102 typically includes a modem 154 or other means for establishing communications over the WAN 150, such as the Internet. The modem 154, which may be internal or external, is connected to the system bus 108 via the user input interface 144. In a networked environment, program modules depicted relative to the personal computer 102, or portions thereof, may be stored in the remote memory storage device. It will be appreciated that the network connections shown are exemplary and other means of establishing a communication link between the computers may be used. In addition, the LAN 148 and WAN 150 may be used as a source of nonvolatile storage for the system.

As previously mentioned, and in accordance with the present invention, a globally relevant playlist is presented, where each track of the playlist is uniquely identifiable, irrespective of the computer, or computer configuration, where the playlist is created. In addition to enabling multiple users to share the same playlist, a globally relevant playlist can be implemented such that it requires very little storage space, or very little communication bandwidth to distribute. According to additional aspects of the invention, globally relevant playlists take full advantage of tracks already accessible to a user's computer, and, as will be discussed in greater detail below, can also identify legitimate sources where a currently unavailable track may be obtained. By providing legitimate sources for unavailable tracks, a user is encouraged to obtain a legitimate copy of a given track, rather than violating copyright laws.

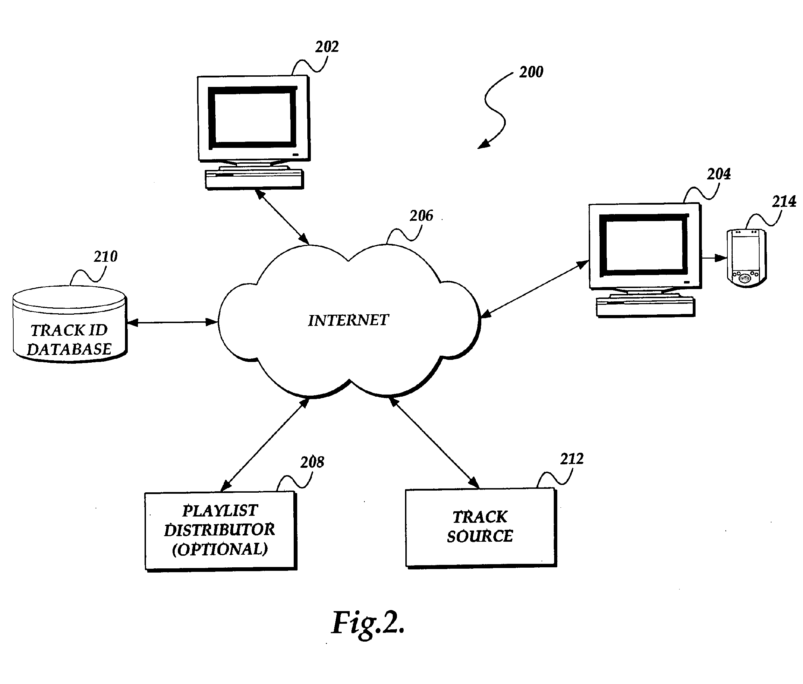

While globally relevant playlists may be distributed among multiple users in a variety of manners, including on physical media such as optical and magnetic discs, flash memory cards, and the like, a more common manner of distributing such playlists is over a communication network, such as the Internet. FIGURE 2 is a block diagram of an exemplary networked computing environment 200 suitable for implementing aspects of the present invention. The exemplary networked environment 200, as illustrated, includes two user computers, computer 202 and computer 204. It should be understood, however, that while the exemplary networked environment 200 shows only two user computers, it is for illustration purposes only, and should not be construed as limiting upon the present invention. Those skilled in the art will recognize that any number of user computers (or computing devices) may be present in an actual embodiment. Additionally, it should be noted that the present invention may be used in a single computer setting, such as when multiple users have separate accounts on the same computer.

As illustrated in FIGURE 2, the computers 202 and 204 are connected via a communications network, such as the Internet 206. However, as already mentioned, user computers need not be connected to each other over a communications network in order to utilize the present invention as globally relevant playlists may be delivered in a variety of different manners, including a physical medium. Accordingly, the present invention should not be construed as limited to operating exclusively on a communications network, such as the Internet 206.

The exemplary networked environment 200 also includes a track identification database 210. The track identification database 210 represents a master list used to uniquely identify individual tracks among multiple computer users. According to one embodiment (as shown), the track identification database 210 may be implemented as a single, monolithic database. Alternatively (not shown), the track identification database 210 may be implemented as a federated system of databases, where each database stores some portion of all of the identified tracks, and where the federated databases are aware of, and query each other for information regarding tracks for which they do not store information. While the federated system of track identification databases may be preferred in certain circumstances, for purposes of clarity and simplicity, the track identification database 210 will be referenced hereafter as a single unit. Additionally, while the track identification database 210 is shown as connected directly to the Internet 206, it is for illustration purposes, and should not be construed as limiting upon the present invention. The track identification database 210 may, alternatively, be connected to any component in the networked environment 200. Additionally, in those environments where a user's computer is not connected to a communication network, a local version of the track identification database 210 should be available on the user's computer in order to properly relate tracks referenced in a globally relevant playlist to tracks accessible to the user's computer.

The exemplary networked environment 200 further includes an optional playlist distributor 208. As will be discussed in greater detail below, the playlist distributor 208 may be used for publishing and distributing globally relevant playlists among multiple user computers, such as user computer 202 and user computer 204. Additionally, the playlist distributor 208 may be used for conducting commerce based on the globally relevant playlists. However, the playlist distributor is an optional clearing house for globally relevant playlists. According to alternative embodiments of the present invention, globally relevant playlists are distributed among users in a peer-to-peer fashion.

Also illustrated in exemplary networked environment 200 is an optional track source 212. The track source 212 is a location from which a user may obtain a legitimate copy of a particular track. For example, if a user on computer 204 obtains a globally relevant playlist from a user on computer 202, all of the tracks referenced in the playlist might not be currently available on computer 204. Thus, according to aspects of the present invention, a globally relevant playlist may include reference information for obtaining one or more tracks from a track source 212 that are currently unavailable on the computer. As already described, by providing references for obtaining legitimate copies of tracks, the present invention encourages users to abide the applicable copyright regulations.

Further shown in the exemplary networked environment 200 is a player device 214, shown connected to the user computer 204. While user computers are generally capable of playing music tracks, most are not highly portable. Thus, many users also use player devices, such as player device 214, for playing music tracks. Player devices, such as MP3 players, combination PDA/audio players, and the like, typically receive tracks from some source, such as user computer 204, in a download process according to a user's instruction. For instance, the user's computer 204 downloads certain tracks from the computer onto the player device 214 for subsequent play, according to track selections from the user. In accordance with the present invention, globally relevant playlists provide an excellent means for selecting tracks for downloading to such a player device 214. It should be understood that while many player devices are equipped to only play tracks, others, such as PDA/player device combination devices (generally referred to hereafter as computing devices), may include capabilities to allow a user to make track selections for playback, or play tracks according to a globally relevant playlist. These combination devices may even permit a user to create and distribute a globally relevant playlist. In such circumstances, the player device 214 may be connected directly to the Internet 206, or operate as a standalone device. Accordingly, the particular arrangement and configuration of computer 204 to player device 214 shown in FIGURE 2 should be viewed as illustrative, not limiting, on the present invention.

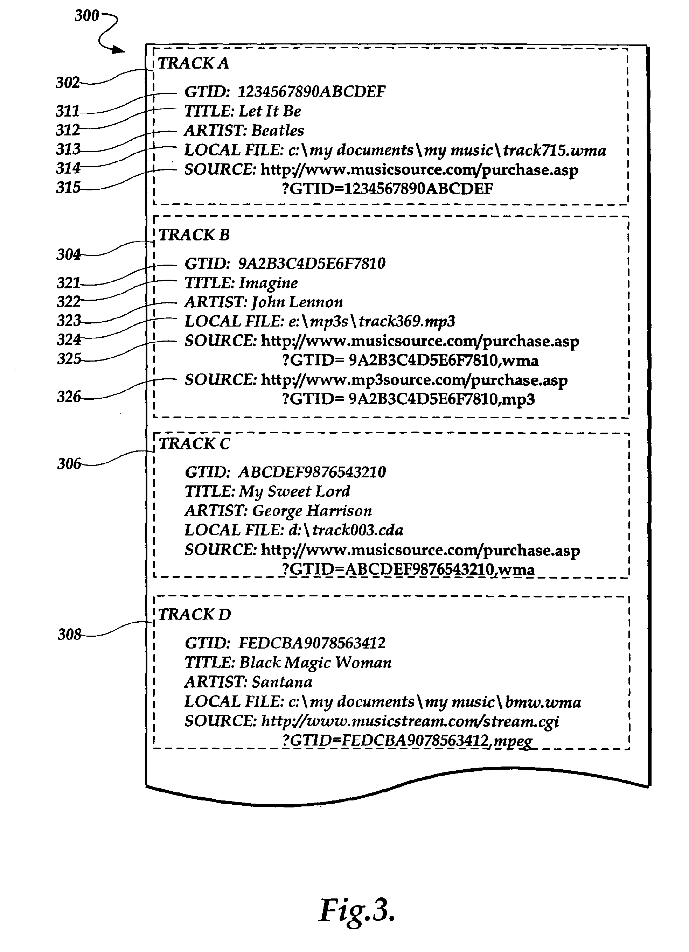

FIGURE 3 is a block diagram illustrating an exemplary globally relevant playlist 300 formed in accordance with aspects of the present invention. The exemplary globally relevant playlist 300, illustrated in FIGURE 3, includes information referencing four tracks, Track A 302, Track B 304, Track C 306, and Track D 308. However, it should be understood that a globally relevant playlist may potentially include references to any number of tracks. Thus, the four tracks that are shown in the exemplary globally relevant playlist 300 are for illustration purposes only, and should not be construed as limiting upon the present invention. For purposes of the present invention, a track represents an audio, or audio/visual recording. According to the present invention, the reference information for each track in the globally relevant playlist 300 includes a global track identifier (GTID). For example, the reference information for Track A 302 includes GTID 311, and the reference information for Track B 304 includes GTID 321.

While the present discussion of globally relevant playlists focuses on GTIDs referencing external tracks, i.e., tracks not stored in the playlist itself, it is for illustration purposes, and should not be construed as limiting upon the present invention. A globally relevant playlist 300 may also include an embedded track (not shown), rather than simply GTIDs referencing external tracks. An embedded track will likely be associated with a GTID in a globally relevant playlist, even though a computing device need not externally locate the embedded track using the GTID.

As mentioned above, the GTID of each track represents a globally unique identifier for that track. Tracks may be arbitrarily assigned a unique value in the track identification database 210. Alternatively, each track's GTID in the track identification database is generated as a function of the contents of the track, sometimes referred to as a "fingerprint" of the track.

Each "original" recording is made in some encoded format, whether it is one of many analog or digital formats. To accommodate different playback equipment, original tracks often must be encoded to other formats. However, when generating a GTID based on the contents of a track, different encodings of the same "recording" could result in very different GTIDs. Thus, according to one aspect of the present invention, the GTIDs for different encodings of the same audio/visual recording are associated in the track identification database 210 so that users can identify and obtain a desired encoding based on any one associated GTID. Thus, the track identification database 210 may include a substitution service for tracks. For example, as shown in the reference information for Track B 304, assume that John Lennon's original recording of *Imagine* has the GTID of 9A2B3C4D5E6F7810. While a person may not want the original, analog format of this track, that GTID corresponding to the original recording/track may be used to obtain an alternate encoding, such as indicated by source field 325 to obtain a "wma" formatted version, or by source field 326 to obtain an "mp3" formatted version.

According to alternative aspects of the present invention, a globally relevant playlist may include alternative, or substitute, GTIDs for a specified track. These alternatives may be listed according to a priority of substitutions if the specified track is unavailable. Alternatively, the substitute tracks may be further associated with recording quality or formats, such that a match may be made between the output/playback capabilities and the selected substitute track.

While many alternative formats and encodings may be used to associated a particular track with a GTID, it is important is that the GTID of a track in a globally relevant playlist uniquely identifies the track. Thus, it should be understood that the particular formats shown in FIGURE 3 are illustrative only, and should not be construed as limiting upon the present invention.

Also shown in FIGURE 3, the track reference information for each track in the globally relevant playlist 300 includes optional detail information regarding the referenced track for a user's convenience. For example, in addition to the GTID field, the track information for each track in the exemplary globally relevant playlist 300 includes a track title, such as 311 and 321, and track artist, such as 312 and 322. Additionally, the track reference information may include optional information for identifying where, on the local computer, a particular track is located. For example, the track information for each track in the exemplary globally relevant playlist 300 includes a local file field, such as fields 314 and 324. Those skilled in the art will recognize that local file fields typically have relevance only to a particular computer, and are therefore used mostly as cached information.

As previously mentioned, the track reference information for each track referenced in a globally relevant playlist 300 may also include optional information for identifying a source from where a track may be obtained, if the referenced track is unavailable/inaccessible to a user's computer. Thus, when playing tracks in a globally relevant playlist, if a particular track is currently unavailable, a system would query the user if he/she would like to obtain the track from the source identified. As shown in FIGURE 3, the track reference information for each track in the exemplary globally relevant playlist 300 includes at least one source field, such as source fields 315, 325, and 326. As shown in the track reference information for Track B 304, the track reference information may include more than one track source. Alternatively (not shown), the track reference information may not include any track source, as a track may not be currently available for purchase or download.

Other information (not shown) may also be included in a globally relevant playlist 300. For example, the exemplary playlist 300 may include information concerning the playlist creator. Such information may be necessary in order to compensate a playlist creator when others purchase the playlist, as described in greater detail below. A globally relevant playlist 300 may also include other information, such as: cross-fading information for indicating the timing of when a second track should begin as a first track is ending; output levels for individual tracks or for the entire playlist; beat matching information; supplemental tracks to be displayed concurrently with primary tracks in the playlist (such as display of images or video clips while an audio track is playing); specific output requirements for the entire playlist or a particular track; and liner notes and graphics.

While the globally relevant playlist 300 shown in FIGURE 3 is presented in a human-readable format, it is for illustration purposes only. In actual embodiments, the globally relevant playlist may be represented in any number of formats, such as using an XML schema, or as a binary file. The format of a globally relevant playlist should not be limited to any particular format.

While many friends will likely want to create and exchange their playlists in order to share favorite tracks and sequences of tracks, according to aspects of the present invention, users may be encouraged to create, and make available to others, globally relevant playlists. For example, a popular artist may wish to publish a globally relevant playlist of favorite tracks to the artist's fans. Additionally, that artist may distribute the globally relevant playlist for a small royalty. Thus, globally relevant playlists can become a new item of commerce and be sold with higher margins than other commodity items, including the individual tracks referenced in the playlists. Applications specially adapted to play tracks from a globally relevant playlist may include provisions to ensure that the creator of a playlist is paid before the tracks are played.

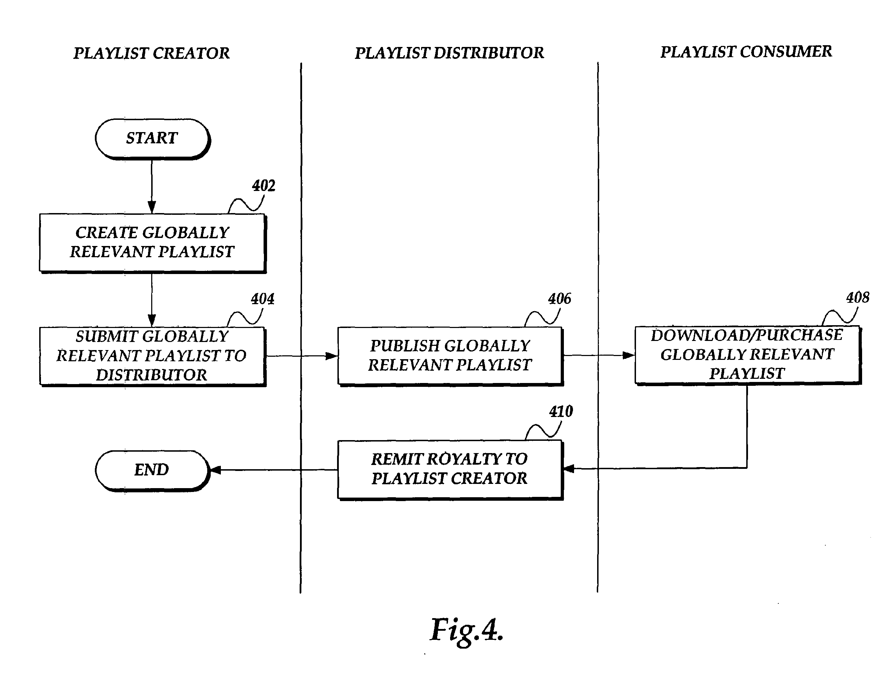

FIGURE 4 is a flow diagram illustrating an exemplary routine 400 for posting a globally relevant playlist and receiving a royalty as the playlist is downloaded for a price. Beginning at block 402, a playlist creator, such as an artist, creates a globally relevant playlist. As described above, the playlist would likely include information identifying the playlist creator so that a royalty may be properly remitted after the playlist is purchased. According to one embodiment, the playlist is digitally signed to ensure authenticity to those that purchase the playlist. Alternatively, a playlist may be encrypted, and by paying for access to the playlist, the playlist is decrypted.

After creating the globally relevant playlist, at block 404, the playlist creator submits the playlist to a playlist distributor 208 (FIGURE 2), where it is made available for purchase by others. The playlist distributor 208 need not be a third party. For example, according to aspects of the present invention, the playlist distributor 208 may be a Web site operated by the playlist creator. At block 408, after the playlist is made available for purchase, a playlist consumer purchases/downloads the playlist from the playlist distributor 208. At block 410, after completing the download/purchase transaction of the playlist, the playlist distributor 208 remits an agreed upon royalty to the playlist creator. Thereafter, the exemplary routine 400 terminates.

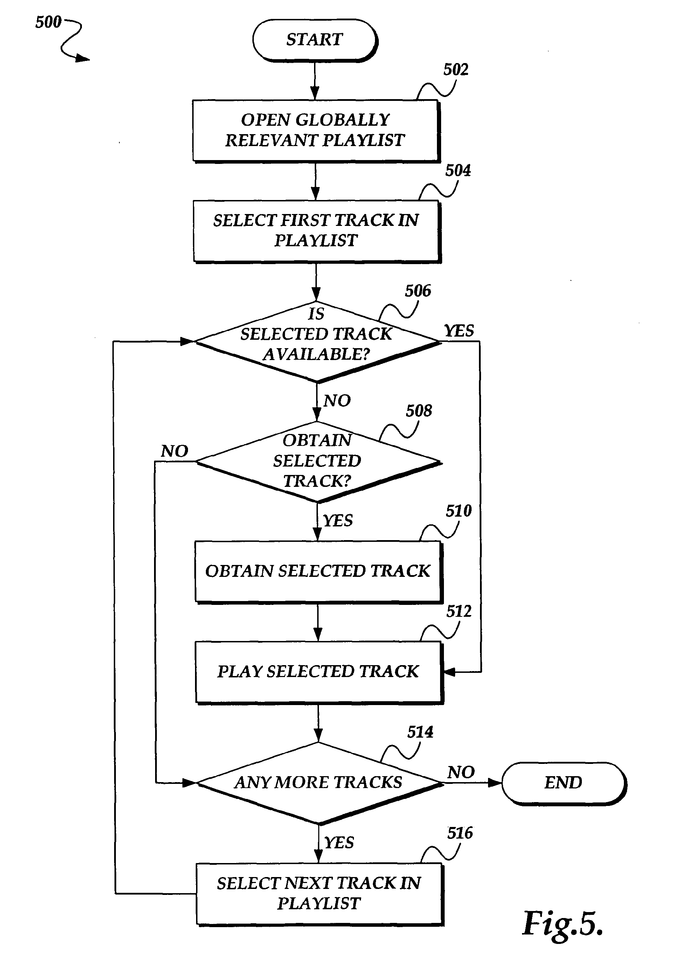

While the flow diagram of FIGURE 4 focuses on commercial aspects of a globally relevant playlist 300, other aspects of the present invention are more particularly directed at making use of a globally relevant playlist. Thus, FIGURE 5 is a flow diagram of an exemplary routine 500 for a user computer, or computing device, to play the tracks referenced in a globally relevant playlist 300. Beginning at block 502, the globally relevant playlist 300 is opened on the user computer. Those skilled in the art will recognize that a user computer will open the playlist 300 via a program module or device designed for track playback purposes.

At block 504, the first track referenced in the globally relevant playlist is selected. At decision block 506, a determination is made as to whether the selected track is locally available to the user computer (or computing device) for playing. This determination is typically made according to a track's GTID, unless it can be determined that cache information also associated with the tracks, such as the file field described above in regard to FIGURE 3, has been generated by the particular user's computer and that such references are valid. This determination may also be further made according to a particular format specified in the globally relevant playlist. If the selected track is not locally available, at decision block 508, another determination is made as to whether the user wishes to purchase the track from an identified track source. If the user wishes to purchase the track, at bock 510, the user obtains the selected track, such as from the identified track source in the globally relevant playlist. It should be understood that they track may be downloaded to the computing device, or alternatively, may be provided/obtained as a stream that is directly output by the computing device. Thereafter, or, if at decision block 506 the track is locally available, at block 512, the selected track is played.

After playing the selected track, or, if at decision block 508 the user does not wish to purchase the selected track, at decision block 514, a determination is made as to whether there are any remaining tracks in the globally relevant playlist 300. If there are additional tracks in the globally relevant playlist 300, at block 516, the next track in the playlist is selected, and the routine returns for further processing to decision block 506. The routine 500 continues until, at decision block 514, there are no more tracks to be selected in the globally relevant playlist 300, whereupon the routine 500 terminates.

According to alternative aspects of the invention, in addition to rewarding a playlist creator for distributing playlists, or as an alternative to the above method 400 described above, a playlist creator may also be compensated as tracks are purchased from track sources via a globally relevant playlist. For example, while playing tracks identified in a globally relevant playlist, if a referenced track is unavailable, and at block 510 the user determines to purchase the track through a track source identified in the playlist, the track source could remit a predetermined royalty to the playlist creator.

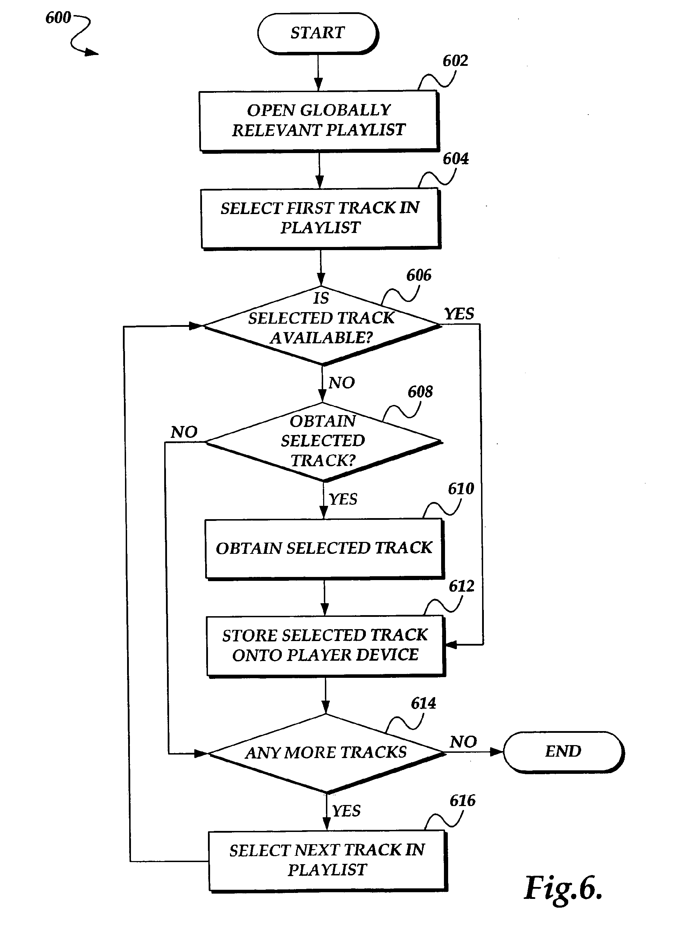

Often, a playlist is used to download music tracks onto a player device 214, such as an MP3 player, rather than playing the tracks on the user's computer. FIGURE 6 is a flow diagram illustrating an exemplary routine 600 for downloading tracks onto a player device according to a globally relevant playlist 300. Beginning at block 602, the globally relevant playlist 300 is opened by a computer, or other computing device, for downloading tracks onto the player device 214. At block 604, the first track in the globally relevant playlist 300 is selected. At decision block 606, a determination is made as to whether the selected track is locally available for downloading to the player device. As also described above in regard to FIGURE 5, this determination is typically made according to the GTID of the track, unless it can be determined that cache information associated with the tracks in the playlist 300, such as the file field described above in regard to FIGURE 3, has been generated by the particular user's computer and that such references are valid. If the selected track is not locally available, at decision block 608, another determination is made as to whether the user wishes to purchase the track from an identified track source. If the user wishes to purchase the track, at block 610, the user obtains the selected track, such as from the identified track source in the globally relevant playlist 300. Thereafter, or, if at decision block 606 the track is locally available, at block 612, the selected track is downloaded to the player device.

After downloading the selected track, or alternatively, if at decision block 608 the user does not wish to purchase the selected track, at decision block 614, a determination is made as to whether there are any remaining tracks in the globally relevant playlist 300. If there are additional tracks in the globally relevant playlist 300, at block 616, the next track in the playlist is selected, and the routine 600 returns to decision block 606 for further processing. The routine 600 continues until, at decision block 614, there are no more tracks to be selected in the globally relevant playlist 300, whereupon the routine terminates.

Frequently, a particular track is accessible on a user computer 204 in a format that is incompatible with the player device 214. For example, a track may be stored on the user computer 204 in an uncompressed, raw audio format, whereas the player device 214, such as an MP3 player, requires downloaded tracks to be in the compressed "mp3" format. In such circumstances, determining whether the track is locally available, as described above in regard to decision block 606, implies determining whether the track is locally available and in a format compatible with the player device 214. Frequently, user computers equipped to download tracks to such player devices have modules that can perform a conversion upon demand. Thus, downloading a track onto a player device may include the step of converting the track to the format compatible with the player device 214. Where such conversions cannot be made locally, a user may be required to obtain the correct format from a remote source, such as a track source 212 mentioned in regard to FIGURE 2.

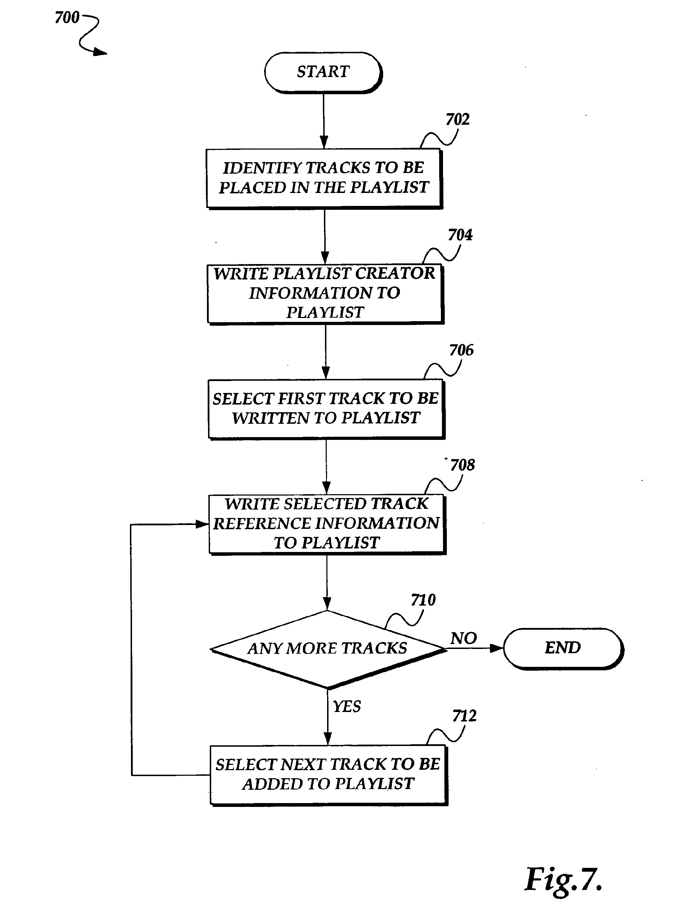

FIGURE 7 is a flow diagram illustrating an exemplary routine 700 for creating a globally relevant playlist 300, in accordance with the present invention. Beginning at block 702, a user identifies those tracks to be listed in the globally relevant playlist 300. At block 704, information identifying the playlist creator is written to the playlist 300. Other information affecting the entire playlist may also be written (not shown). At block 706, the first track to be listed in the globally relevant playlist 300 is selected. At block 708, the selected track's GTID and any optional reference information such as track sources, artist information, track name, and the like, are written to the playlist 300.

At decision block 710, a determination is made as to whether any additional tracks are to be added to the globally relevant playlist 300. If there are additional tracks to be added to the globally relevant playlist 300, at block 712, the next track to be added to the playlist is selected and the routine 700 returns again to block 708 for further processing. This routine continues until, at decision block 710, there are no more tracks to be added to the globally relevant playlist 300, whereupon the routine 700 terminates.

While the preferred embodiment of the invention has been illustrated and described, it will be appreciated that various changes can be made therein without departing from the spirit and scope of the invention.

## Claims

1. A method for playing audio tracks on a computing device according to a globally relevant playlist, the method comprising:
selecting a first track referenced by the globally relevant playlist;
determining whether the first track is currently accessible to the computing device according to a global track identifier associated with the first track in the globally relevant playlist; and
if, according to the previous determination, the first track is currently accessible to the computing device, playing the first track on the computing device.

2. The method of Claim 1 further comprising if, according to the previous determination, the first track is not currently accessible to the computing device, determining whether the first track may be obtained from a remote location, and if so:
obtaining the first track from the remote location according to the global track identifier; and
playing the first track on the computing device.

3. The method of Claim 2 further comprising obtaining the first track from the remote location according to the global track identifier and a specified track format.

4. The method of Claim 2 further comprising determining whether any additional tracks are referenced by the globally relevant playlist, and if so:
for each additional track referenced by the globally relevant playlist:
selecting the additional track referenced by the globally relevant playlist;
determining whether the selected additional track is currently accessible to the computing device according to a global track identifier associated with the selected additional track in the globally relevant playlist; and
if, according to the previous determination, the selected additional track is currently accessible to the computing device, playing the selected additional track on the computing device.

5. The method of Claim 4 further comprising:
for each additional track referenced by the globally relevant playlist:
if, according to the previous determination, the selected additional track is not currently accessible to the computing device, determining whether the selected additional track may be obtained from a remote location, and if so:
obtaining the selected additional track from the remote location according to the global track identifier; and
playing the selected additional track on the computing device.

6. The method of Claim 5 further comprising obtaining the selected additional track, from the remote location according to the global track identifier and a specified track format.

7. A computer-readable medium having computer-executable instructions which, when executed, carry out a method for playing audio tracks on a computing device, comprising:
selecting a first track referenced by a globally relevant playlist;
determining whether the first track is currently accessible to the computing device according to a global track identifier associated with the first track in the globally relevant playlist; and
if, according to the previous determination, the first track is currently accessible to the computing device, playing the first track on the computing device.

8. The method of Claim 7 further comprising if, according to the previous determination, the first track is not currently accessible to the computing device, determining whether the first track may be obtained from a remote location, and if so:
obtaining the first track from the remote location according to the global track identifier; and
playing the first track on the computing device.

9. The method of Claim 8 further comprising obtaining the first track from the remote location according to the global track identifier and a specified track format.

10. The method of Claim 8 further comprising determining whether any additional tracks are referenced by the globally relevant playlist, and if so:
for each additional track referenced by the globally relevant playlist:
selecting the additional track referenced by the globally relevant playlist;
determining whether the selected additional track is currently accessible to the computing device according to a global track identifier associated with the selected additional track in the globally relevant playlist; and
if, according to the previous determination, the selected additional track is currently accessible to the computing device, playing the selected additional track on the computing device.

11. The method of Claim 10 further comprising:
for each additional track referenced by the globally relevant playlist:
if, according to the previous determination, the selected additional track is not currently accessible to the computing device, determining whether the selected additional track may be obtained from a remote location, and if so:
obtaining the selected additional track from the remote location according to the global track identifier; and
playing the selected additional track on the computing device.

12. The method of Claim 11 further comprising obtaining the selected additional track from the remote location according to the global track identifier and a specified track format.

13. A method for downloading tracks from a computing device onto a player device according to a globally relevant playlist, the method comprising:
selecting a first track referenced by the globally relevant playlist;
determining whether the first track is currently accessible to the computing device according to a global track identifier associated with the first track in the globally relevant playlist; and
if, according to the previous determination, the first track is currently accessible to the computing device, downloading the first track from the computing device to the player device.

14. The method of Claim 13 further comprising if, according to the previous determination, the first track is not currently accessible to the computing device, determining whether the first track may be obtained from a remote location, and if so:
obtaining the first track from the remote location according to the global track identifier; and
downloading the first track from the computing device to the player device.

15. The method of Claim 14 further comprising obtaining the first track from the remote location according to the global track identifier and a specified track format.

16. The method of Claim 14 further comprising determining whether any additional tracks are referenced by the globally relevant playlist, and if so:
for each additional track referenced by the globally relevant playlist:
selecting the additional track referenced by the globally relevant playlist;
determining whether the selected additional track is currently accessible to the computing device according to a global track identifier associated with the selected additional track in the globally relevant playlist; and
if, according to the previous determination, the selected additional track is currently accessible to the computing device, downloading the selected additional track from the computing device to the player device.

17. The method of Claim 16 further comprising:
for each additional track referenced by the globally relevant playlist:
if, according to the previous determination, the selected additional track is not currently accessible to the computing device, determining whether the selected additional track may be obtained from a remote location, and if so:
obtaining the selected additional track from the remote location according to the global track identifier; and
downloading the selected additional track from the computing device to the player device.

18. The method of Claim 17 further comprising obtaining the selected additional track from the remote location according to the global track identifier and a specified track format.

19. The method of Claim 17, wherein determining whether the first track is currently accessible to the computing device according to a global track identifier associated with the first track in the globally relevant playlist comprises:
determining whether the first track is currently accessible to the computing device according to the global track identifier and in a format compatible with the player device.

20. The method of Claim 19 further comprising if, according to the previous determination, the first track is currently accessible to the computing device but not in a format compatible with the player device:
on the computing device, converting the first track to a format compatible with the player device; and
downloading the converted first track from the computing device to the player device.

21. The method of Claim 20, wherein determining whether the selected additional track is currently accessible to the computing device according to a global track identifier associated with the selected additional track in the globally relevant playlist comprises:
determining whether the selected additional track is currently accessible to the computing device according to the global track identifier and in a format compatible with the player device.

22. The method of Claim 21, further comprising if, according to the previous determination, the selected additional track is currently accessible to the computing device but not in a format compatible with the player device:
on the computing device, converting the selected additional track to a format compatible with the player device; and
downloading the converted selected additional track from the computing device to the player device.

23. A computer-readable medium having computer-executable instructions which, when executed, carry out the method for downloading tracks from a computing device onto a player device, comprising:
selecting a first track referenced by a globally relevant playlist;
determining whether the first track is currently accessible to the computing device according to a global track identifier associated with the first track in the globally relevant playlist; and
if, according to the previous determination, the first track is currently accessible to the computing device, playing the first track on the computing device.

24. The method of Claim 23 further comprising if, according to the previous determination, the first track is not currently accessible to the computing device, determining whether the first track may be obtained from a remote location, and if so:
obtaining the first track from the remote location according to the global track identifier; and
downloading the first track from the computing device to the player device.

25. The method of Claim 24 further comprising obtaining the first track from the remote location according to the global track identifier and a selected track format.

26. The method of Claim 24 further comprising determining whether any additional tracks are referenced by the globally relevant playlist, and if so:
for each additional track referenced by the globally relevant playlist:
selecting the additional track referenced by the globally relevant playlist;
determining whether the selected additional track is currently accessible to the computing device according to a global track identifier associated with the selected additional track in the globally relevant playlist; and
if, according to the previous determination, the selected additional track is currently accessible to the computing device, downloading the selected additional track from the computing device to the player device.

27. The method of Claim 26 further comprising:
for each additional track referenced by the globally relevant playlist:
if, according to the previous determination, the selected additional track is not currently accessible to the computing device, determining whether the selected additional track may be obtained from a remote location, and if so:
obtaining the selected additional track from the remote location according to the global track identifier; and
downloading the selected additional track from the computing device to the player device.

28. The method of Claim 27 further comprising obtaining the selected additional track from the remote location according to the global track identifier and a selected track format.

29. A method for creating a globally relevant playlist, the method comprising:
identifying a plurality of tracks to be referenced by the playlist, and for each identified track:
writing track reference information into the globally relevant playlist, the track reference information including a global track identifier that uniquely identifies the track among a plurality of computing devices.

30. The method of Claim 29, wherein the track reference information further includes a track source from which the identified track may be obtained over a communication network.

31. The method of Claim 29, wherein the track reference information further includes the identified track's artist.

32. The method of Claim 29, wherein the track reference information further includes the identified track's title.

33. A globally relevant playlist for controlling the play of tracks on a computing device, comprising:
a plurality of track references referencing a corresponding plurality of tracks, each track reference including a global track identifier that uniquely identifies the corresponding track among a plurality of computing devices.

34. The globally relevant playlist of Claim 33, wherein each track reference further includes a track source from which the corresponding track may be obtained over a communication network.

35. The globally relevant playlist of Claim 33, wherein each track reference further includes information identifying the corresponding track's artist.

36. The globally relevant playlist of Claim 33, wherein each track reference further includes information identifying the corresponding track's title.

37. The globally relevant playlist of Claim 33 further comprising information identifying the globally relevant playlist's creator.
